# EUROPEAN PATENT SPECIFICATION

(11) **EP 3 158 675 B1**
(45) Date of publication and mention of the grant of the patent: **11.03.2020**
(21) Application number: 15700384.9
(22) Date of filing: 14.01.2015
(51) Int. Cl.: H04L 5/00, H04W 72/00

(54) **TRANSPARENT OFDMA OPERATION WITHIN OFDM-BASED COMMUNICATION SYSTEMS**
TRANSPARENTER OFDMA-BETRIEB IN OFDM-BASIERTEN KOMMUNIKATIONSSYSTEMEN
OPÉRATION OFDMA TRANSPARENTE DANS DES SYSTÈMES DE COMMUNICATION OFDM

(43) Date of publication of application: 26.04.2017
(73) Proprietor: Huawei Technologies Co., Ltd., Longgang District Shenzhen, Guangdong 518129 (CN)
(72) Inventor: SHILO, Shimi, 80992 Munich (DE); EZRI, Doron, 80992 Munich (DE); KLAUSNER, Ohad, 80992 Munich (DE); WEITZMAN, Avi, 80992 Munich (DE); SUN, Fuqing, 80992 Munich (DE); FAN, Ronghu, 80992 Munich (DE)
(74) Representative: Kreuz, Georg Maria
(86) International application number: PCT/EP2015/050599
(87) International publication number: WO 2016/112974

(56) References cited:
- EP-A1- 2 854 474
- US-A1- 2011 222 486
- US-A1- 2013 188 565
- BRIAN HART (CISCO SYSTEMS): "DL-OFDMA for Mixed Clients ; 11-10-0317-01-00ac-dl-ofdma-for-mixed-clie nts", IEEE DRAFT; 11-10-0317-01-00AC-DL-OFDMA-FOR-MIXED-CLIE NTS, IEEE-SA MENTOR, PISCATAWAY, NJ USA, vol. 802.11ac, no. 1, 16 March 2010 (2010-03-16), pages 1-24, XP017677327, [retrieved on 2010-03-16]
- CHAO-CHUN WANG ET AL: "11ac AP Multi-User support with Frequency Domain Multiplexing ; 11-10-0787-00-00ac-11ac-ap-multi-user-supp ort-with-frequency-domain-multiplexing", IEEE DRAFT; 11-10-0787-00-00AC-11AC-AP-MULTI-USER-SUPP ORT-WITH-FREQUENCY-DOMAIN-MULTIPLEXING, IEEE-SA MENTOR, PISCATAWAY, NJ USA, vol. 802.11ac, 11 July 2010 (2010-07-11), pages 1-16, XP017676664, [retrieved on 2010-07-11]

## Description

### FIELD OF INVENTION

The invention relates to methods and station for use in OFDM-based communication systems.

### TECHNICAL BACKGROUND

Currently, legacy 802.11a/g stations - both Access Point (AP) and clients - support transmissions over 20MHz bandwidth. In order to support the higher throughputs, more advanced WiFi standards (also: Wireless LAN standards), such as 802.11n and 802.11ac, support larger transmission bandwidth: For example, the 802.1 In standard supports 40MHz (in addition to the 20MHz of legacy systems), and the 802.11ac standard adds support for 80/160MHz.

The two communicating stations (or more, in case of downlink multi-user MIMO in the 802.11ac standard) coordinate between themselves what bandwidth will be used for the transmission. The utilized bandwidth may for example depend on the capabilities of the involved stations, the link conditions, coordination with neighboring APs, etc.

Since Orthogonal Frequency Division Multiplexing (OFDM) is used in the 802.11a/g/n/ac compliant WiFi systems, the entire selected bandwidth is allocated for the transmission. In case two stations have decided that 40MHz bandwidth will be used for transmission, then the entire 40MHz bandwidth will be used solely for communicating between the two stations. Furthermore, even if at least one of these stations supports a larger bandwidth, only 40MHz will be used and the rest will not be utilized.

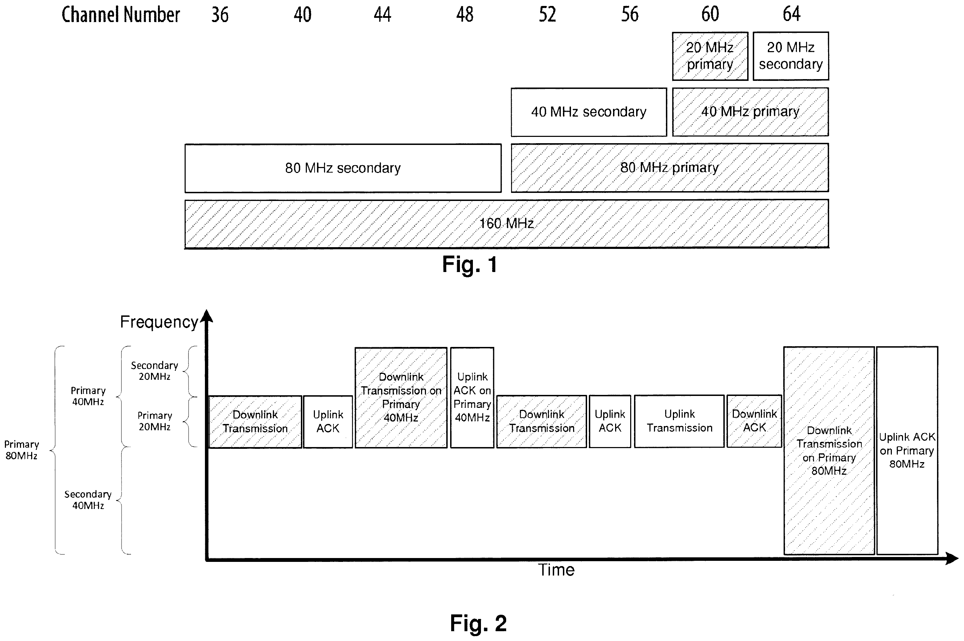

The above shortcoming will be explained in more detail in connection with Figs. 1 and 2 in the following. As noted above, whereas the legacy 802.11a/g standards support only 20MHz channel bandwidth, the 802.11n standard added support for 40MHz channel bandwidth. 802.11n also defined a primary (20MHz) channel and a secondary (20MHz) channel. The management information, including beacons, is transmitted only on the primary channel (though sometimes beacons are duplicated onto the secondary channels as well). In order to coco-exist with legacy (802.11a/g) stations, the 20MHz legacy portion of the preamble is replicated over both 20MHz parts of the 40MHz channel. Therefore, legacy stations operating on the primary channel can co-exist with 40MHz 802.11n stations.

The more advanced 802.11ac standard added support, beyond 20MHz and 40MHz, for 80MHz, 80+80MHz and 160MHz channels. Like in the 802.11n systems, 802.11ac allows channel bandwidth to be determined on a per-frame basis. This means that the channel bandwidth can be adjusted dynamically so that it matches what each station (associated with the AP) supports as well as varying interference conditions. In order to assist in this dynamic bandwidth allocation, 802.11ac defined primary and secondary channels not only for 40MHz but for all bandwidths. The primary channel is the channel used to transmit a signal at its native bandwidth. One primary channel is defined for each channel bandwidth (one 20MHz primary channel, one 40MHz primary channel, etc.).

Fig. 1 highlights this and shows an example of primary and secondary channels with 8 channels (160MHz of bandwidth) of an 802.11ac-compliant WiFi system. For each bandwidth (except 160MHz) there is a single primary channel. In any moment, only one single primary channel is used for transmission (or the entire 160MHz bandwidth), so if the 40MHz primary channel is used, the rest of the 120MHz is unused.

In most scenarios, there is a mixture of stations, each supporting a different bandwidth (for example, a mix of 802.11a/g/n/ac clients). However, as described earlier, only a single primary channel can be used at any moment for communication between the AP and the station(s). This means that the spectrum is often severely under-utilized and the bandwidth allocation is highly inefficient, as exemplarily highlighted in Fig. 2. Fig. 2 shows a time sequence of exemplary transmissions between an AP and different clients utilizing different bandwidths. In more detail, Fig. 2 shows a typical scenario of an AP supporting a bandwidth of 80MHz, being in communication with clients supporting a bandwidth of 20MHz, 40MHz and 80MHz clients. As shown, the spectrum utilization is rather poor. Obviously, as the number of 20MHz (Legacy) clients increases, the spectrum utilization decreases.

US 2011/0222486 A1 discloses a method for better using spectrum available to a wireless access point (AP) that services a Basic Service Set (BSS) comprising a mix of different types of client devices.

US 2013/0188565 A1 discloses a method for allocating radio resources by a coordinating wireless communication device in a wireless communications network EP 2 854 474 discloses using an AP spanning two WLANs on different channels in parallel.

### SUMMARY

One object of the invention is to suggest an optimized utilization of available bandwidth/spectrum in a wireless communication system. It is a further and more specific object to suggest the above noted inefficiency in the use of bandwidth within the currently known 802.11 standards.

A first aspect of the invention suggests a mechanism that allows the simultaneous transmissions in different parts of the available spectrum. For example, an access point thereby enables simultaneous transmissions from/to multiple client stations on different parts of the spectrum. According to this first aspect, this is achieved by implementing orthogonal frequency division multiple access (OFDMA) that is transparent to the communicating stations.

In Orthogonal Frequency Division Multiple Access (OFDMA) the bandwidth can be divided between multiple clients communicating with a single AP, such that each client is allocated a different part of the spectrum; OFDMA is therefore significantly more efficient in terms of spectrum allocation when compared to OFDM.

For example, an access point could implement transparent OFDMA (i.e. the client stations are unaware of it) by using multiple station identifiers, each of which is associated to a different part of the available bandwidth/spectrum (channel) in order to support simultaneous transmissions on the different parts of the bandwidth/spectrum. The "parts" of the spectrum are sometimes referred to as sub-bands herein below.

In the context of an advanced WiFi system, the station identifiers may correspond to different Basic Service Set IDs (BSSIDs) of a single access point, each supporting a different part of the available bandwidth. Transmissions of different clients may be scheduled by the access point on these different portions of the bandwidth utilizing these BSSIDs.

In line with the first aspect, one embodiment thereof relates to a station for use in an OFDM-based communication system. In this embodiment, the station comprises a transceiver unit that is configured to communicate using a predetermined frequency band of the OFDM-based communication system. The transceiver unit further advertises plural and distinct station identifiers each associated to one of a plurality of mutually different sub-bands of the predetermined frequency band. The station further comprises an OFDM modulator configured to transmit signals to a plurality of clients in parallel via said different sub-bands of the predetermined frequency band corresponding to the different station identifiers. In an embodiment a single OFDM modulator is used to transmit the signals to the plurality of clients in parallel via said different sub-bands of the predetermined frequency band corresponding to the different station identifiers.

The station may be for example an Access Point (AP) for use in a Wireless LAN (WiFi), but the invention is not limited to use in WiFi systems. Similarly, the predetermined frequency band could be for example frequency band according to a Wireless LAN standard of the 802.11 family (such as the 2.4GHz band or the 5GHz band). By advertising different station identifiers associated to different sub-bands, simultaneous transmissions from different and to different clients on the different sub-bands are enabled.

In another embodiment, the station further comprises a processing unit that dynamically reconfigures the number of mutually different sub-bands and/or the configuration of each sub-band of the predetermined frequency band based on one or more decision criteria.

In a further embodiment, the station comprises a processing unit configured to determine whether the predetermined frequency band is to be divided into said mutually different sub-bands. This decision may be based one or more decision criteria. Furthermore, the processing unit may be further configured to determine the distinct station identifiers for each of said sub-bands.

In an example implementation of this embodiment, the decision criteria may be based on a cost function which depends on the utilization of the predetermined frequency band and/or an overall throughput achieved for all clients connected to the station.

In yet another embodiment, the transceiver unit of the station is configured to transmit a disassociation frame to a client using a sub-band of the predetermined frequency band that is no longer maintained after a reconfiguration of the sub-bands.

In a further embodiment, the transceiver unit of the station is configured to transmit a handover request to a client in communication with the station via a sub-band of the predetermined frequency band that is no longer maintained after a reconfiguration of the sub-band. The handover request may for example cause the client to hand over to another sub-band of the predetermined bandwidth maintained or newly established after reconfiguration.

In another embodiment, at least some of the sub-bands of the predetermined frequency band overlap with each other.

In a further embodiment, the distinct station identifiers are each associated to mutually different sub-bands of the predetermined frequency band for communication between the station and one or more clients.

In another embodiment, the transceiver unit is configured to transmit, in parallel, first downlink data and second downlink data to a first client and second client, respectively, utilizing different sub-bands of the frequency band. Optionally, the transceiver unit is further configured to transmit the first downlink data and the second downlink data in data frames of the same size.

In another embodiment, the station further comprises a scheduler that schedules uplink transmissions from clients and/or downlink transmissions to clients.

In yet another embodiment, the transceiver unit of the station is further configured to receive, in parallel and synchronized to each other, first uplink data and second uplink data from a first client and second client, respectively, utilizing different sub-bands of the frequency band. In an example implementation, synchronized reception refers to the simultaneous receipt of transmission from the clients at an access point.

In another embodiment, the station (e.g. the transceiver unit) is configured to receive signals from a plurality of clients. Each of the clients may transmit on a different sub-band of the predetermined frequency band.

In another embodiment, all of the advertised station identifiers belong to the same physical station advertising such station identifiers.

Another exemplary embodiment implementing the first aspect of the invention provides a method for use in a station of an OFDM-based communication system. In this method, plural and distinct station identifiers are advertised (simultaneously). The station identifiers are each associated to one of a plurality of mutually different sub-bands of a predetermined frequency band of the OFDM-based communication used for communication. Furthermore, signals are transmitted in parallel to a plurality of clients via said different sub-bands of the predetermined frequency band corresponding to said different station identifiers. The signals can be transmitted using a single OFDM modulator.

In a further embodiment, the method further comprises dynamically reconfiguring the number of mutually different sub-bands and/or the configuration of each sub-band of the predetermined frequency band based on one or more decision criteria.

According to another embodiment, the method further comprises determining whether the predetermined frequency band is to be divided into said mutually different sub-bands based one or more decision criteria, and determining the distinct station identifiers for each of said sub-bands.

As noted above, in some embodiments, the decision criteria may be based on a cost function which depends on the utilization of the predetermined frequency band and/or an overall throughput achieved for all clients connected to the station.

The method of another embodiment may further comprise transmitting a disassociation frame to a client using a sub-band of the predetermined frequency band that is no longer maintained after a reconfiguration of the sub-bands.

In yet another embodiment, the method comprises transmitting a handover request to a client in communication with the station via a sub-band of the predetermined frequency band that is no longer maintained after a reconfiguration of the sub-band. As noted previously herein, the handover request may for example cause the client to hand over to another sub-band of the predetermined bandwidth maintained or newly established after reconfiguration.

In another embodiment, at least some of the sub-bands of the predetermined frequency band overlap with each other.

In a further embodiment, the distinct station identifiers are each associated to mutually different sub-bands of the predetermined frequency band for communication between the station and one or more clients.

The method of yet another embodiment further comprises transmitting, in parallel, first downlink data and second downlink data to a first client and second client, respectively, utilizing different sub-bands of the frequency band. Optionally, the first downlink data and the second downlink data may be transmitted in data frames of the same size.

According to another embodiment, the method further comprises receiving, in parallel and synchronized to each other, first uplink data and second uplink data from a first client and second client, respectively, utilizing different sub-bands of the frequency band.

The method of a further embodiment comprises receiving signals (even without synchronization) from a plurality of clients, where each client may transmit on a different sub-band of the predetermined frequency band.

In another embodiment, all of the advertised station identifier belong to the same physical station advertising such station identifiers.

Other embodiments of the invention relate to implementing the method for use in a station of an OFDM-based communication system within a computer program. According to these embodiments, the computer program comprises program code for performing, when running on a computer, the method for use in a station of an OFDM-based communication system according to one of the various embodiments discussed herein.

### BRIEF DESCRIPTION OF FIGURES

In the following embodiments of the invention are described in more detail in reference to the attached figures and drawings. Similar or corresponding details in the figures are marked with the same reference numerals.
- **Fig. 1**: shows an example of primary and secondary channels with 8 channels (160MHz of bandwidth) of an 802.11ac-compiant WiFi system,
- **Fig. 2**: shows a time sequence of exemplary transmissions between an access point and different clients utilizing different bandwidths,
- **Fig. 3**: shows a flow chart of a method for use in an access point for implementing a transparent OFDMA operation according to an embodiment,
- **Fig. 4**: shows a time sequence of exemplary transmissions between an access point and different clients utilizing different bandwidths according to an exemplary embodiment, and
- **Fig. 5**: shows an exemplary access point according to an exemplary embodiment.

### DETAILED DESCRIPTION

The following paragraphs will describe various embodiments of the different aspects. For exemplary purposes only, most of the embodiments are outlined in relation to an enhanced WiFi system. Note that it is also possible that OFDM is used in next generation WiFi standards, and this invention is also applicable to those enhanced WiFi systems. Generally, the invention is applicable to OFDM-based wireless systems, where the available bandwidth cannot be fully utilized by the stations (e.g. clients) for communications, e.g. due to the stations only supporting transmission within a sub-band (spectrum part) of the available bandwidth of the partner station (e.g. access point or base station).

As noted above, one aspect of the invention is related to enabling simultaneous transmissions in different parts of the available spectrum in an OFDMA-like fashion within an OFDM-based communication system. In the following examples, an access point (or base station) within such OFDM-based communication system (e.g. an evolved WiFi system) facilitates simultaneous transmissions from/to multiple client stations on different parts of the spectrum. Considering for exemplary purposes the scenario of Fig. 2, different parts of the spectrum may thus be used to implement respective "primary channels" (or "channels" for short) for communication with the clients, which improves bandwidth utilization. In order to support such OFDMA operation in an otherwise not OFDMA-enabled OFDM system, the OFDMA operation is transparent to the clients, i.e. the clients are not aware of the OFDMA operation performed by the access point. This can be achieved by associating the respective spectrum parts ("primary channels") to respective and distinct access point identifiers that belong to one (physical) access point. In the context of an enhanced WiFi system, the station identifiers may correspond to different Basic Service Set IDs (BSSIDs) of a single access point (also referred to in general as station). Transmissions of different clients may be scheduled by the access point on these different primary channels utilizing the access point identifiers, but also contention based access schemes can be realized. Due to the access point advertising the different access point identifiers via the air interface (e.g. together with additional information on the configuration of the respective primary channel), from a client perspective, the access point would appear as multiple access points offering respective primary channels for access that are associated with distinct access point identifiers, although in reality communication occurs between the clients and one single access point.

The use of spectrum parts as individual primary channels may be for example statically configured, but in order to optimize bandwidth utilization, a dynamic configuration may be realized. Note that the individual spectrum parts (mentioned sub-bands) may not necessarily have the same bandwidth, but spectrum parts may have different bandwidths, and it may also happen that a part of the spectrum (mentioned predetermined frequency band) is not utilized. Note that it may be possible that the sub-bands of the predetermined frequency band (spectrum) overlap with each other.

In such dynamic configuration, the access point may re-evaluate the division of the spectrum based on different criteria. The re-evaluation may be for example performed in time intervals, e.g. periodically, and/or event triggered.

In some examples, when changing the division of the spectrum, clients using a primary channel (or access point identifier, which is equivalent) not maintained after re-configuration may be requested by the access point to hand over to another primary channel (or access point identifier advertised by the same access point). The other primary channel might be a primary channel that is continued to be available after re-configuration or a new primary channel with a new access point identifier advertised by the same access point). As noted previously herein, the handover request may for example cause the client to hand over to another sub-band of the predetermined bandwidth maintained or newly established after reconfiguration. However, the physical access point serving the client remains the same.

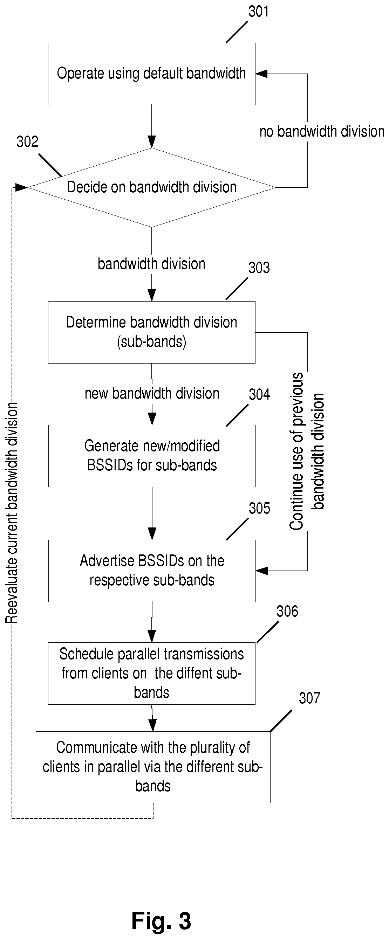

Fig. 3 shows a flow chart of a method for use in an access point for implementing a transparent OFDMA operation according to an embodiment. For example purposes it is assumed that the access point starts its operation 301 without dividing the default bandwidth of the system, e.g. 80 MHz or 160 MHz of a non-legacy WiFi system. The access point is assumed to serve plural client stations within its coverage area.

The client stations may have different capabilities as to their bandwidth utilization. For example, legacy-WiFi clients (802.11a/g compliant clients) may be able to utilize on a bandwidth of 20 MHz for transmission, while non-legacy WiFi clients (e.g. 802.11ac and/or 802.11n compliant clients) may support a channel bandwidth of 40 MHz, 80 MHz or even 160 MHz. It can be assumed for exemplary purposes that the access point supports a channel bandwidth of 160 MHz. The access point takes a decision 302, whether the available spectrum can be better utilized by dividing the bandwidth into separate spectrum parts (sub-bands) or not. The access point may for example compute the costs (according to a given cost function) of operating with the default bandwidth (i.e. 80 MHz in this example), and compares the computed costs with the costs of operating the spectrum in different spectrum parts (each being associated to a respective primary channel identified by a unique access point identifier).

The costs may be computed, for example, based on one of the following: the utilization of the spectrum over time (the more the spectrum is used, the higher the utilization and therefore higher performance) and/or the overall throughput achieved for all stations. For example, simultaneously communicating with two stations using a 20MHz channel for each may increase the overall throughput compared with using a 40MHz channel for both, because collisions may be reduced. Generally, it is important to note that bandwidth division can increase throughput, because it can reduce the collision rate by scheduling client stations on different channels (so there are fewer stations on each channel), so that the number of collisions can be reduced.

In case the access point decides not to use bandwidth division (any more), the default operation is continued ("no bandwidth division" case), i.e. a single channel is used in accordance with conventional techniques (e.g. standard 802.11 operation). In case the access point decides to divide the spectrum into plural channels ("bandwidth division"), the access point determines 303 how the available spectrum should be divided, i.e. the number of channels and their bandwidths. In case such decision process does not change the previously utilized division of the spectrum, the use of the already determined access point identifiers (for example BSSIDs) can be continued ("continue use of previous bandwidth division"). Otherwise, a new set of access point (station) identifiers is determined 303 for the new channels (spectrum parts or sub-bands). Note that it may be possible to continue use of some of the previously determined access point identifiers for the new channels (e.g. channel reconfiguration with the same access point identifier being used after reconfiguration).

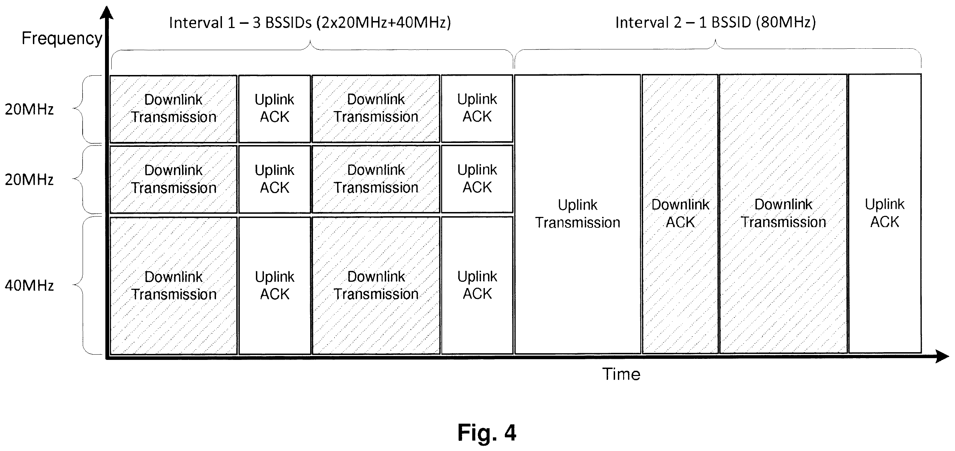

Note that when determining the bandwidth division, the access point also has to decide how to divide the available spectrum. For example the spectrum may be a division in frequency only (e.g. multiple channels on distinct sub-bands, optionally with different bandwidths) or a division in frequency and time. The division of frequency and time means that the frequency division is changed after a predetermined time period, as it is for example exemplified in Fig. 4, where in a first time interval ("interval 1") the bandwidth of 80 MHz is divided into two 20 MHz channels and one 40 MHz channel, and in a subsequent interval ("interval 2") the entire bandwidth of 80 MHz is used in one channel. Note that the intervals 1 and 2 could be repeated until the next re-evaluation of the bandwidth division. Similar to step 302, the access point may use a cost function that compares the costs of respective possible candidate bandwidth divisions to choose the optimum bandwidth division. In this example 4 different station identifiers are used (1 for each sub-band, a first station identifier for the first 20 MHz sub-band, a second station identifier for the second 20 MHz sub-band, a third station identifier for the 40MHz sub-band, and a fourth station identifier for the 80 MHz sub-band). All station identifiers belong to same physical station or access point. The division in time can be achieved by scheduling which is controlled by the access point. I.e. the clients are only allowed to transmit data in certain time slots associated to the assigned sub-bands.

As each sub-band of the spectrum forming a channel is to have a corresponding identifier, the access point next generates 304 a set of identifiers (e.g. BSSIDs) for the different channels. As noted, some already used identifiers may be reused. In this latter case, in some example implementations, a previously existing channel may be continued to be used together with its channel identifier (e.g. BSSID), which may involve a reconfiguration of the channel bandwidth through an update of control information that are provided by the access point. Each new/modified identifier of a channel is then advertised 305 by the access point, e.g. by means of broadcast. This advertisement of control information may include not only the channel identifier (that is an access point identifier from the perspective of the client stations) but also control information on the configuration of the channel, e.g. the bandwidth, so that the client stations can identify and connect to the access point via the given channel. Note that in a WiFi system, the control information may be broadcast in so-called beacon frames.

Note that in case of a reconfiguration of the bandwidth division, the access point may optionally perform additional administrative steps. This is however not mandatory, since after client stations recognizing that the access point identifier of their channel is no longer advertised, they will time out and will reconnect to another advertised access point identifier (which may be on another channel but may have the same or another bandwidth). During the reconfiguration, the access point may ensure that at least all currently connected clients can reconnect to the access point using one of the newly advertised station identifiers (being associated to a sub-band having a bandwidth which is supported by the client).

However, to avoid the delay in the reconnection due to time-out, the access point may for example send a disassociation frame to clients connecting through a channel that is discontinued under the given access point identifier prior to discontinuing the channel. Accordingly, client stations would be informed on the discontinuation of their channel and can swiftly connect to a new channel (another access point identifier) that is advertised, after reconfiguration. Optionally, the access point may use a load balancing mechanism to balance association of the reconnecting client stations to the different channels advertised after reconfiguration of the channel bandwidth. Note that optionally the disassociation frame may indicate a point in time at which the disassociation occurs, and the access point starts advertising the new channel configuration at this point in time or earlier (e.g. shortly before, meaning a time period before the point in time which is less than the time-out interval).

In another example, the access point may also request individual ones or all client stations to handover/roam to another channel, e.g. by indicating the new access point identifier the client station(s) are to connect to. This could be for example facilitated by using respective commands defined in the WiFi standard 802.1 1r.

After advertising the new set of channel identifiers (access point identifiers from the client stations' perspective) and, where necessary, client stations reconnecting to the different channels associated therewith, the access point communicates with the client stations via the different channels. This may for example include scheduling 306 transmissions for the clients in uplink and/or downlink. Note, since the available spectrum is split in different portions corresponding to respective channels and access point identifiers/channel identifiers, it is possible that transmissions in uplink and/or downlink are sent concurrently on the different channels allowing for a more effective utilization of the spectrum.

Based on scheduled transmissions, the access point then communicates 307 with the plurality of clients in parallel via the different sub-bands using the different access point identifiers. In other words signals are transmitted to the clients and are received from the clients (e.g. using a single OFDM modulator) in parallel via said different sub-bands of the predetermined frequency band corresponding to said different station identifiers.

Note that the improvements described herein may be utilized in conventional access points and may be realized by a corresponding software/firmware update of the access points. Hence, the improvements described herein may be readily realized within access points that have a single ODFM modulator (e.g. working in one predetermined frequency band of the OFDM based communication system). This may be for example achieved by ensuring appropriate mapping of information bits (including e.g. the access point identifiers, control information, user data, etc.) to modulation symbols that are mapped to the sub-carriers belonging to the respective spectrum parts (channels) according to the bandwidth division. In other words, the communication over all the sub-bands having the different station identifiers can happen using the same OFDM modulator.

Considering the incorporation of the improvements discussed herein within a WiFi system, Enhanced Distributed Channel Access (EDCA) could be used. EDCA uses the TCMA (Tiered Contention Multiple Access) protocol, which is a variation of CSMA/CA using a shorter arbitration inter-frame space (AIFS) for higher priority packets. The access point can send frames on the different channels (BSSIDs) in the downlink simultaneously (starting transmission concurrently). If the uplink acknowledgements (ACKs) for respective downlink packets are required to be transmitted simultaneously from the clients (or if delayed ACK is not supported), the packets transmitted simultaneously on the different channels may be of the same length. Zero padding and/or Null packets may be used to match the size of the packets where needed.

Alternatively, for example if delayed Block ACK is supported or if no ACK is required, the downlink transmissions can be of different length. In case Block ACKs are possible (e.g. 802.11n/ac clients), the client stations may be instructed by the access point to delay their Block ACK so that their ACK transmissions are not simultaneously received at the access point.

In the uplink, several different operation modes could be used. For example, a CTS-To-Self can be transmitted across all BSSIDs to allow time-division between BSSIDs (so that only a single BSSID is used at any time). This would thus correspond to a TDD scheme, where different channels (BSSIDs) are used in respective time slots. In another example (or in addition to TDD operation), in case there is a small number of clients (e.g. below a given threshold), the contention window can be increased, so that the probability of collision in the uplink is small (the larger the contention window, the smaller the probability of collision).

Furthermore, it is also possible that 802.11g/n/ac clients are forced to use the RTS/CTS (Request to Send / Clear to Send) mechanism, which enables the transmission of CTS on all channels (BSSIDs).

In another example, several front-ends (including re-samplers) can be used, so that in effect several narrow-bandwidth receivers are employed concurrently.

The improvements discussed therein may also be utilized in a WiFi system utilizing Hybrid Coordination Function (HCA) Controlled Channel Access (HCCA). In HCCA mode, as opposed to EDCAmode described earlier, client stations are scheduled (e.g. polled) in downlink and uplink. This means that clients can be scheduled simultaneously for data and management information. Accordingly, the AP can for example send a Contention-Free Poll (CF-Poll) instruction to several clients (each one in its respective bandwidth segment/channel), and the clients respond accordingly. This also means efficiently allocating downlink and uplink transmissions between the channels according to requirements of clients. This enables smooth transition between bandwidth segments. In addition, clients' uplink data can be scheduled to begin transmission simultaneously. Advantageously data packets in the uplink have with the same size or are integer multiples of a minimum packets size (in terms of number of bits). Zero padding and/or fragmentation and/or Null packets may be used to match the size of the packets where needed.

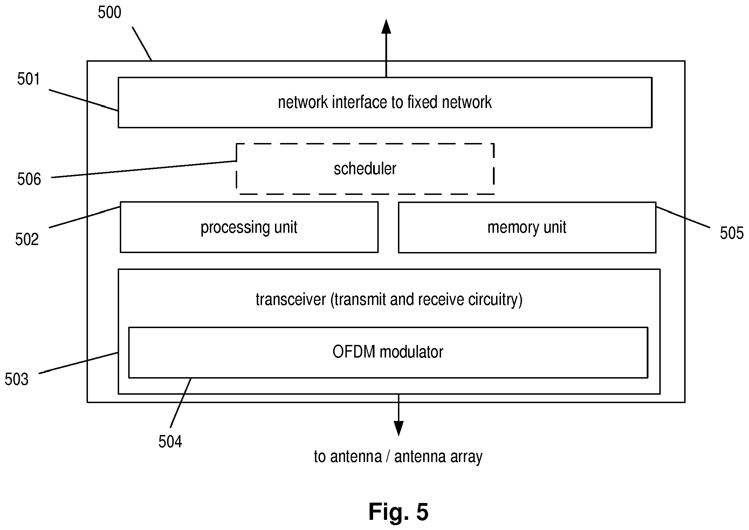

Fig. 5 shows an exemplary access point 500 (or station 500) according to an embodiment of the present invention. The access point 500 may be connected to a fixed network within a larger network infrastructure through a network interface 501. For example, the access point may also incorporate a (A)DSL router or cable modem functionality to connect the access point to the Internet. Access point 500 may further comprise a processor unit 502 to perform the different computations and determinations necessary for implementing the improvements suggested herein. The processor unit 502 may for example be used to make a decision whether bandwidth division is to be utilized or needs reconfiguration. The processor unit 502 may further also determine the allocation of the available spectrum to the different channels, the determination of access point identifiers (e.g. BSSIDs), control information for the beacon frames, and/or may be used to implement a scheduling function, e.g. in case HCCA mode is used in an exemplary WiFi implementation. The memory unit 505 represents a generic storage medium that may comprise one or more storage elements, such as ROM, RAM, etc. The storage unit 505 may for example store the computer executable instructions of a program code for implementing the above noted improvements.

The access point 500 may also have a transceiver unit 503 that is implementing the transmit and receive circuitry for facilitating wireless communication with the client stations via an air interface (e.g. according a certain OFDM mobile communication standard). The transceiver unit 503 may for example comprise an encoder/decoder function for encoding the information bits (user data). Further the transceiver unit 503 may also comprise an ODFM modulator 504 for converting a stream of encoded information bits into OFDM signals that are transmitted via one or more antennas to the client stations. Optionally, ODFM modulator 504 may also have a demodulator functionality to perform the inverse conversion. The OFDM modulator 504 may modulate the encoded information bits using for example QAM or PAM modulation, mapping of the modulated symbols to the sub-carries and creating a time domain OFDM signal (e.g. by implementing IDFT). The OFDM modulator 504 may also include the corresponding demodulation to recover the encoded information bits from the signals received on the different sub-carriers of the spectrum, which may include DFT and demodulation of the PAM or QAM symbols.

In other words the station 500 for use in an OFDM-based communication system comprises a transceiver unit 503. The transceiver unit 503 is configured to communicate using a predetermined frequency band of the OFDM-based communication system. The transceiver unit 503 is configured to advertise plural and distinct station identifiers each associated to at least one of a plurality of mutually different sub-bands of the predetermined frequency band. Furthermore, the station 500 comprises an OFDM modulator 504 configured to transmit signals to a plurality of clients in parallel via said different sub-bands of the predetermined frequency band corresponding to said different station identifiers. The association between station identifiers and sub-bands can change over time. However, at each point in time each currently advertised station identifier is associated to only one currently available sub-band.

Furthermore, the 500 may comprise a processing unit configured to dynamically reconfigure the number of mutually different sub-bands and/or the configuration of each sub-band of the predetermined frequency band based on one or more decision criteria.

Such a processing unit may be configured to determine whether the predetermined frequency band is to be divided into said mutually different sub-bands based one or more decision criteria, and is further configured to determine the distinct station identifiers for each of said sub-bands.

The decision criteria can be based on a cost function which depends on the utilization of the predetermined frequency band and/or an overall throughput achieved for all clients connected to the station.

Furthermore, the transceiver unit 503 can be configured to transmit above mentioned disassociation frame to a client using a sub-band of the predetermined frequency band that is no longer maintained after a reconfiguration of the sub-bands.

Furthermore the transceiver unit 503 can be configured to transmit a handover request to a client in communication with the station via a sub-band of the predetermined frequency band that is no longer maintained after a reconfiguration of the sub-band.

Furthermore, at least some of the sub-bands of the predetermined frequency band can overlap with each other.

According to some embodiments the station is an Access Point for use in a Wireless LAN and the predetermined frequency band is a Wireless LAN frequency band (e.g. the 2.4GHz band or the 5GHz band.

The distinct station identifiers can be each associated to mutually different sub-bands of the predetermined frequency band for communication between the station and one or more clients.

The transceiver unit 503 can be configured to transmit, in parallel, first downlink data and second downlink data to a first client and second client, respectively, utilizing different sub-bands of the frequency band (and using different distinct station identifiers). Furthermore, the transceiver unit 503 can be configured to transmit the first downlink data and the second downlink data in data frames of the same size.

Furthermore, the station 500 can comprise a scheduler 506 (e.g. as part of the processing unit 502 or in addition to that) configured to schedule uplink transmissions from clients and/or downlink transmissions to clients.

The scheduler 506 can be configured to schedule the transmissions such that transmissions to or from different client having overlapping sub-bands assigned are scheduled at different points in time. See for example, Fig. 4 where transmissions in the 40MHz and 20MHz sub-bands are scheduled in another interval than transmissions in the overlapping 80MHz sub-bands. Hence, collisions can be avoided.

Furthermore, the scheduler 506 can be configured to schedule the transmissions such that transmissions to or from different client having non-overlapping sub-bands assigned are scheduled at least sometimes at the same points in time. See for example, Fig. 4 where transmissions in the 40MHz and 20MHz sub-bands are scheduled in the same interval and there for at the same points in time. Hence, the available spectrum or frequency band can be fully utilized.

Furthermore, transceiver unit 503 can be configured to receive, in parallel and synchronized to each other, first uplink data and second uplink data from a first client and second client, respectively, utilizing different sub-bands of the frequency band.

Furthermore, the station (e.g. transceiver unit 503) can be configured to receive signals from a plurality of clients, where each client may transmit on a different sub-band of the predetermined frequency band.

All of the advertised station identifier advertised by the station 500 may also belong to the same physical station 500 advertising such station identifiers. In other words, the station 500 advertises only station identifiers belonging to itself.

It should be further noted that the individual features of the different embodiments of the aspects discussed herein may individually or in arbitrary combination be subject matter to another invention.

Although some aspects have been described in the context of a method, it is clear that these aspects also represent a description of the corresponding apparatus suitably adapted to perform such method. In such apparatus a (functional or tangible) block or device may correspond to one or more method step or a feature of a method step. Analogously, aspects described in the context of a corresponding block or item or feature of a corresponding apparatus may also correspond to individual method steps of a corresponding method.

Furthermore, the methods described herein may also be executed by (or using) a hardware apparatus, like a processor, microprocessor, a programmable computer or an electronic circuit. Some one or more of the most important method steps may be executed by such an apparatus. Where an apparatus has been described herein in terms of functional elements, e.g. processing unit, receiving unit, transmitter unit, or the like, it should be further understood that those elements of the apparatus may be fully or partly implemented in hardware elements/circuitry. Individual hardware, like a processor or microprocessor, a transmitter circuitry, receiver circuitry, etc., may be used to implement the functionality of one or more elements of the apparatus.

In addition, where information or data is to be stored in the process of implementing a method step of functional element of an apparatus in hardware, the apparatus may comprise memory or storage medium, which may be communicably coupled to one or more hardware elements/circuitry of the apparatus.

It is also contemplated implementing the aspects of the invention in in hardware or in software or a combination thereof. This may be using a digital storage medium, for example a a DVD, a CD, a ROM, a PROM, an EPROM, an EEPROM or a FLASH memory, having electronically readable control signals or instructions stored thereon, which cooperate (or are capable of cooperating) with a programmable computer system such that the respective method is performed. A data carrier may be provided which has electronically readable control signals or instructions, which are capable of cooperating with a programmable computer system, such that the method described herein is performed.

It is also contemplated implementing the aspects of the invention in the form of a computer program product with a program code, the program code being operative for performing the method when the computer program product runs on a computer. The program code may be stored on a machine readable carrier.

The above described is merely illustrative, and it is understood that modifications and variations of the arrangements and the details described herein will be apparent to others skilled in the art. It is the intent, therefore, to be limited only by the scope of the impending claims and not by the specific details presented by way of description and explanation above.

## Claims

1. A station (500) for use in an OFDM-based communication system, the station comprising:
a transceiver unit (503) configured to communicate using a predetermined frequency band of the OFDM-based communication system, wherein the transceiver unit (503) is configured to advertise plural and distinct station identifiers each associated to one of a plurality of mutually different sub-bands of the predetermined frequency band, wherein the station (500) is a wireless local area network, WLAN, access point (500), and wherein the station identifiers are Basic Service Set IDs, BSSIDs; and
an OFDM modulator (504) configured to transmit signals to a plurality of clients in parallel via said different sub-bands of the predetermined frequency band corresponding to said different station identifiers.

2. The station (500) of claim 1, further comprising a processing unit (502) configured to dynamically reconfigure the number of mutually different sub-bands and/or the configuration of each sub-band of the predetermined frequency band based on one or more decision criteria.

3. The station (500) of claim 1 or 2, further comprising a processing unit (502) configured to determine whether the predetermined frequency band is to be divided into said mutually different sub-bands based one or more decision criteria, and is further configured to determine the distinct station identifiers for each of said sub-bands.

4. The station (500) of claim 2 or 3, wherein the decision criteria is based on a cost function which depends on the utilization of the predetermined frequency band and/or an overall throughput achieved for all clients connected to the station.

5. The station (500) of one of the preceding claims, wherein the transceiver unit (503) is configured to transmit a disassociation frame to a client using a sub-band of the predetermined frequency band that is no longer maintained after a reconfiguration of the sub-bands.

6. The station (500) of one of the preceding claims, wherein the transceiver unit (503) is configured to transmit a handover request to a client in communication with the station via a sub-band of the predetermined frequency band that is no longer maintained after a reconfiguration of the sub-band.

7. The station (500) of one of the preceding claims, wherein at least some of the sub-bands of the predetermined frequency band overlap with each other.

8. The station (500) of one of the preceding claims, wherein the station is an Access Point for use in a Wireless LAN and the predetermined frequency band is a Wireless LAN frequency band.

9. The station (500) of one of the preceding claims, wherein the distinct station identifiers are each associated to mutually different sub-bands of the predetermined frequency band for communication between the station (500) and one or more clients.

10. The station (500) of one of the preceding claims, wherein the transceiver unit (503) is configured to transmit, in parallel, first downlink data and second downlink data to a first client and second client, respectively, utilizing different sub-bands of the frequency band.

11. The station (500) of claim 10, wherein the transceiver unit (503) is configured to transmit the first downlink data and the second downlink data in data frames of the same size.

12. The station (500) of one of the preceding claims, further comprising a scheduler (506) configured to schedule uplink transmissions from clients and/or downlink transmissions to clients.

13. The station (500) of one of the preceding claims, wherein the transceiver unit (503) is configured to receive, in parallel and synchronized to each other, first uplink data and second uplink data from a first client and second client, respectively, utilizing different sub-bands of the frequency band.

14. The station (500) of one of the preceding claims, further configured to receive signals from a plurality of clients, where each client may transmit on a different sub-band of the predetermined frequency band.

15. The station (500) of one of the preceding claims, wherein all of the advertised station identifiers belong to the same physical station advertising such station identifiers.

16. A method for use in a station of an OFDM-based communication system, the method comprising:
advertising (305) plural and distinct station identifiers each associated to one of a plurality of mutually different sub-bands of a predetermined frequency band of the OFDM-based communication used for communication, wherein the station is wireless local area network, WLAN, access point, and wherein the station identifiers are Basic Service Set IDs, BSSIDs; and
transmitting (307), using an OFDM modulator, signals to a plurality of clients in parallel via said different sub-bands of the predetermined frequency band corresponding to said different station identifiers.

17. A computer program comprising instructions which, when the program is executed by a computer, cause the computer to carry out the method of claim 16.

## Patentansprüche

1. Station (500) zur Verwendung in einem OFDM-basierten Kommunikationssystem, wobei die Station umfasst:
eine Sendeempfängereinheit (503), die dafür ausgelegt ist, unter Verwendung eines vorbestimmten Frequenzbandes des OFDM-basierten Kommunikationssystems zu kommunizieren, wobei die Sendeempfängereinheit (503) dafür ausgelegt ist, mehrere und unterschiedliche Stationskennungen bekannt zu geben, die jeweils einem von mehreren voneinander verschiedenen Teilbändern des vorbestimmten Frequenzbandes zugeordnet sind, wobei die Station (500) ein Zugangspunkt (500) eines drahtlosen lokalen Netzwerks, WLAN, ist und wobei die Stationskennungen "Basis Service Set" IDs, BSSIDs, sind; und
einen OFDM-Modulator (504), der dafür ausgelegt ist, Signale parallel an mehrere Clients über die verschiedenen Teilbänder des vorbestimmten Frequenzbandes, die den verschiedenen Stationskennungen entsprechen, zu übertragen.

2. Station (500) nach Anspruch 1, welche ferner eine Verarbeitungseinheit (502) umfasst, die dafür ausgelegt ist, die Anzahl voneinander verschiedener Teilbänder und/oder die Konfiguration jedes Teilbandes des vorbestimmten Frequenzbandes basierend auf einem oder mehreren Entscheidungskriterien dynamisch neu zu konfigurieren.

3. Station (500) nach Anspruch 1 oder 2, welche ferner eine Verarbeitungseinheit (502) umfasst, die dafür ausgelegt ist zu bestimmen, ob das vorbestimmte Frequenzband in die voneinander verschiedenen Teilbänder basierend auf einem oder mehreren Entscheidungskriterien aufzuteilen ist, und ferner dafür ausgelegt ist, die verschiedenen Stationskennungen für jedes der Teilbänder zu bestimmen.

4. Station (500) nach Anspruch 2 oder 3, wobei das Entscheidungskriterium auf einer Kostenfunktion basiert, welche von der Auslastung des vorbestimmten Frequenzbandes und/oder einem Gesamtdurchsatz, der für alle mit der Station verbundenen Clients erreicht wird, abhängt.

5. Station (500) nach einem der vorhergehenden Ansprüche, wobei die Sendeempfängereinheit (503) dafür ausgelegt ist, einen Disassoziationsrahmen an einen Client zu senden, welcher ein Teilband des vorbestimmten Frequenzbandes verwendet, welches nach einer Neukonfiguration der Teilbänder nicht mehr beibehalten wird.

6. Station (500) nach einem der vorhergehenden Ansprüche, wobei die Sendeempfängereinheit (503) dafür ausgelegt ist, eine Weiterreichungsanforderung an einen Client zu übertragen, der mit der Station über ein Teilband des vorbestimmten Frequenzbandes in Kommunikation steht, welches nach einer Neukonfiguration des Teilbandes nicht mehr beibehalten wird.

7. Station (500) nach einem der vorhergehenden Ansprüche, wobei wenigstens einige der Teilbänder des vorbestimmten Frequenzbandes einander überlappen.

8. Station (500) nach einem der vorhergehenden Ansprüche, wobei die Station ein Zugangspunkt für ein "Wireless LAN" ist und das vorbestimmte Frequenzband ein "Wireless LAN"-Frequenzband ist.

9. Station (500) nach einem der vorhergehenden Ansprüche, wobei die unterschiedlichen Stationskennungen jeweils voneinander verschiedenen Teilbändern des vorbestimmten Frequenzbandes zur Kommunikation zwischen der Station (500) und einem oder mehreren Clients zugeordnet sind.

10. Station (500) nach einem der vorhergehenden Ansprüche, wobei die Sendeempfängereinheit (503) dafür ausgelegt ist, parallel erste "Downlink"-Daten und zweite "Downlink"-Daten unter Verwendung verschiedener Teilbänder des Frequenzbandes an einen ersten Client bzw. zweiten Client zu übertragen.

11. Station (500) nach Anspruch 10, wobei die Sendeempfängereinheit (503) dafür ausgelegt ist, die ersten "Downlink"-Daten und die zweiten "Downlink"-Daten in Datenrahmen derselben Größe zu übertragen.

12. Station (500) nach einem der vorhergehenden Ansprüche, welche ferner einen "Scheduler" (506) umfasst, der dafür ausgelegt ist, "Uplink"-Übertragungen von Clients und/oder "Downlink"-Übertragungen an Clients zu planen.

13. Station (500) nach einem der vorhergehenden Ansprüche, wobei die Sendeempfängereinheit (503) dafür ausgelegt ist, parallel und synchronisiert zueinander erste "Uplink"-Daten und zweite "Uplink"-Daten von einem ersten Client bzw. zweiten Client unter Verwendung verschiedener Teilbänder des Frequenzbandes zu empfangen.

14. Station (500) nach einem der vorhergehenden Ansprüche, welche ferner dafür ausgelegt ist, Signale von mehreren Clients zu empfangen, wobei jeder Client auf einem anderen Teilband des vorbestimmten Frequenzbandes senden kann.

15. Station (500) nach einem der vorhergehenden Ansprüche, wobei alle bekannt gegebenen Stationskennungen zu derselben physischen Station gehören, die solche Stationskennungen bekannt gibt.

16. Verfahren zur Anwendung in einer Station eines OFDM-basierten Kommunikationssystems, wobei das Verfahren umfasst:
Bekanntgeben (305) mehrerer und unterschiedlicher Stationskennungen, die jeweils einem von mehreren voneinander verschiedenen Teilbändern eines zur Kommunikation verwendeten vorbestimmten Frequenzbandes der OFDM-basierten Kommunikation zugeordnet sind, wobei die Station ein Zugangspunkt eines drahtlosen lokalen Netzwerks, WLAN, ist und wobei die Stationskennungen "Basis Service Set" IDs, BSSIDs, sind; und
Übertragen (307), unter Verwendung eines OFDM-Modulators, von Signalen parallel an mehrere Clients über die verschiedenen Teilbänder des vorbestimmten Frequenzbandes, die den verschiedenen Stationskennungen entsprechen.

17. Computerprogramm, welches Anweisungen umfasst, welche, wenn das Programm von einem Computer ausgeführt wird, bewirken, dass der Computer das Verfahren nach Anspruch 16 ausführt-

## Revendications

1. Station (500) destinée à être utilisée dans un système de communication à base d'OFDM, la station comprenant :
une unité d'émission-réception (503) configurée pour communiquer en utilisant une bande de fréquences prédéterminée du système de communication à base d'OFDM, dans lequel l'unité d'émission-réception (503) est configurée pour annoncer plusieurs identifiants de station distincts dont chacun est associé à l'une d'une pluralité de sous-bandes mutuellement différentes de la bande de fréquences prédéterminée, dans lequel la station (500) est un point d'accès (500) de réseau local sans fil, WLAN, et dans lequel les identifiants de station sont des ID d'Ensembles de Services de Base, BSSID ; et
un modulateur OFDM (504) configuré pour transmettre des signaux à une pluralité de clients en parallèle via lesdites différentes sous-bandes de la bande de fréquences prédéterminée correspondant auxdits différents identifiants de station.

2. Station (500) selon la revendication 1, comprenant en outre une unité de traitement (502) configurée pour reconfigurer dynamiquement le nombre de sous-bandes mutuellement différentes et/ou la configuration de chaque sous-bande de la bande de fréquences prédéterminée sur la base d'un ou de plusieurs critères de décision.

3. Station (500) selon la revendication 1 ou 2, comprenant en outre une unité de traitement (502) configurée pour déterminer si la bande de fréquences prédéterminée doit être divisée en lesdites sous-bandes mutuellement différentes sur la base d'un ou de plusieurs critères de décision, et en outre configurée pour déterminer les identifiants de station distincts pour chacune desdites sous-bandes.

4. Station (500) selon la revendication 2 ou 3, dans laquelle le critère de décision est basé sur une fonction de coût qui dépend de l'utilisation de la bande de fréquences prédéterminée et/ou d'un débit global obtenu pour tous les clients connectés à la station.

5. Station (500) selon l'une des revendications précédentes, dans laquelle l'unité d'émission-réception (503) est configurée pour transmettre une trame de dissociation à un client en utilisant une sous-bande de la bande de fréquences prédéterminée qui n'est plus maintenue après une reconfiguration des sous-bandes.

6. Station (500) selon l'une des revendications précédentes, dans laquelle l'unité d'émission-réception (503) est configurée pour transmettre une demande de transfert à un client en communication avec la station via une sous-bande de la bande de fréquences prédéterminée qui n'est plus maintenue après une reconfiguration de la sous-bande.

7. Station (500) selon l'une des revendications précédentes, dans laquelle au moins certaines des sous-bandes de la bande de fréquences prédéterminée se chevauchent les unes les autres.

8. Station (500) selon l'une des revendications précédentes, dans laquelle la station est un Point d'Accès destiné à être utilisé dans un réseau local sans fil et la bande de fréquences prédéterminée est une bande de fréquences de réseau local sans fil.

9. Station (500) selon l'une des revendications précédentes, dans laquelle les identifiants de station distincts sont chacun associés à des sous-bandes mutuellement différentes de la bande de fréquences prédéterminée pour les communications entre la station (500) et un ou plusieurs clients.

10. Station (500) selon l'une des revendications précédentes, dans laquelle l'unité d'émission-réception (503) est configurée pour transmettre, en parallèle, des premières données de liaison descendante et des secondes données de liaison descendante à un premier client et à un second client, respectivement, en utilisant différentes sous-bandes de la bande de fréquences.

11. Station (500) selon la revendication 10, dans laquelle l'unité d'émission-réception (503) est configurée pour transmettre les premières données de liaison descendante et les secondes données de liaison descendante dans des trames de données de même taille.

12. Station (500) selon l'une des revendications précédentes, comprenant en outre un ordonnanceur (506) configuré pour ordonnancer des transmissions de liaison montante depuis des clients et/ou des transmissions de liaison descendante vers des clients.

13. Station (500) selon l'une des revendications précédentes, dans laquelle l'unité d'émission-réception (503) est configurée pour recevoir, en parallèle et de manière synchronisée entre elles, des premières données de liaison montante et des secondes données de liaison montante en provenance d'un premier client et d'un second client, respectivement, en utilisant différentes sous-bandes de la bande de fréquences.

14. Station (500) selon l'une des revendications précédentes, configurée en outre pour recevoir des signaux en provenance d'une pluralité de clients, chaque client pouvant transmettre sur une sous-bande différente de la bande de fréquences prédéterminée.

15. Station (500) selon l'une des revendications précédentes, dans laquelle tous les identifiants de station annoncés appartiennent à une même station physique annonçant ces identifiants de station.

16. Procédé destiné à être utilisé dans une station d'un système de communication à base d'OFDM, le procédé comprenant :
l'annonce (305) de plusieurs identifiants de station distincts dont chacun est associé à l'une d'une pluralité de sous-bandes mutuellement différentes d'une bande de fréquences prédéterminée de la communication à base d'OFDM utilisée pour les communications, dans lequel la station est un point d'accès de réseau local sans fil, WLAN, et dans lequel les identifiants de station sont des ID d'Ensembles de Services de Base, BSSID ; et
la transmission (307), en utilisant un modulateur OFDM, de signaux à une pluralité de clients en parallèle via lesdites différentes sous-bandes de la bande de fréquences prédéterminée correspondant auxdits différents identifiants de station.

17. Programme d'ordinateur comprenant des instructions qui, lorsque le programme est exécuté par un ordinateur, amènent l'ordinateur à mettre en œuvre le procédé selon la revendication 16.
